(19) Europäisches Patentamt
European Patent Office
Office européen des brevets

(11) **EP 3 209 516 B1**

(12) **EUROPÄISCHE PATENTSCHRIFT**

(45) Veröffentlichungstag und Bekanntmachung des Hinweises auf die Patenterteilung:
**12.06.2019 Patentblatt 2019/24**

(21) Anmeldenummer: **15770804.1**

(22) Anmeldetag: **25.09.2015**

(51) Int Cl.:
**B60L 53/37** *(2019.01)* **B60L 53/12** *(2019.01)*

(86) Internationale Anmeldenummer:
**PCT/EP2015/001907**

(87) Internationale Veröffentlichungsnummer:
**WO 2016/062367 (28.04.2016 Gazette 2016/17)**

(54) **VERFAHREN ZUM POSITIONIEREN EINES KRAFTFAHRZEUGS UND ZUGEHÖRIGES KRAFTFAHRZEUG**

METHOD FOR POSITIONING A MOTOR VEHICLE, AND ASSOCIATED MOTOR VEHICLE

PROCÉDÉ DE POSITIONNEMENT D'UN VÉHICULE AUTOMOBILE ET VÉHICULE AUTOMOBILE ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.10.2014 DE 102014015668**

(43) Veröffentlichungstag der Anmeldung:
**30.08.2017 Patentblatt 2017/35**

(73) Patentinhaber: **Audi AG**
**85045 Ingolstadt (DE)**

(72) Erfinder:
• **SCHULLER, Florian**
  **85737 Ismaning (DE)**
• **ELIAS, Björn**
  **85120 Hepberg (DE)**
• **HEINEMANN, Patrick**
  **85092 Kösching (DE)**

(74) Vertreter: **Thielmann, Frank**
**AUDI AG**
**Patentabteilung**
**85045 Ingolstadt (DE)**

(56) Entgegenhaltungen:
**WO-A2-2011/114208 US-A1- 2012 200 151 US-A1- 2014 074 352**

EP 3 209 516 B1

**Beschreibung**

Die Erfindung betrifft ein Verfahren zum Positionieren eines Kraftfahrzeugs oberhalb einer Ladeeinrichtung zum induktiven Laden einer Batterie.

Fahrzeuge mit einem Elektroantrieb besitzen eine Batterie als Energiespeicher, die im Anschluss an eine Entladephase wieder aufgeladen werden muss. Dabei wird ein kabelloses Laden als besonders komfortabel für den Benutzer angesehen. Dadurch entfällt das Verbinden der Batterie mit einer Stromquelle, beispielsweise durch Anschließen eines Ladekabels. Es sind daher bereits Ladeplatten oder Ladeeinrichtungen entwickelt worden, wobei eine Komponente fahrzeugseitig und eine andere Komponente infrastrukturseitig vorgesehen ist, um die Batterie des Kraftfahrzeugs durch induktive Energieübertragung wieder aufzuladen. Die infrastrukturseitige Ladeeinrichtung kann z. B. in einer Garage, unter einem Carport oder in einer Tiefgarage angeordnet sein. Typischerweise sind derartige Ladeeinrichtungen als Platte oder Matte ausgebildet, so dass das Kraftfahrzeug oberhalb der Ladeeinrichtung positioniert werden kann. Damit beim induktiven Laden ein hoher Wirkungsgrad erzielt wird, ist es erforderlich, das Kraftfahrzeug sehr genau oberhalb der Ladeeinrichtung zu positionieren.

In der DE 10 2011 108 689 A1 wird vorgeschlagen, eine ortsfeste Ladestation mit einem Marker zu versehen, der von einer Kamera erfasst werden kann, so dass das Kraftfahrzeug nach der Erfassung des Markers autonom auf die gewünschte Position oberhalb der Ladeeinrichtung bewegt werden kann.

In ähnlicher Weise schlägt auch die DE 10 2011 111 051 A1 vor, eine Positionsmarke z. B. an einer Wand anzubringen, die von einer Kamera erfasst werden kann. Durch eine Auswertung der von der Kamera erfassten Bilder werden Position und Orientierung des Kraftfahrzeugs relativ zur Positionsmarke ermittelt, um das genaue Positionieren des Fahrzeugs zu erleichtern.

Die JP 2010-226945 A beschreibt eine Ladeeinrichtung zum induktiven Laden einer Batterie, bei der eine Markierung exakt in Verlängerung der Längsrichtung der Ladeeinrichtung angebracht ist, so dass der Fahrer sich beim Positionieren des Kraftfahrzeugs an dem Marker orientieren kann.

Bei herkömmlichen Verfahren besteht das Problem, dass die Ladeeinrichtung, oberhalb der das Kraftfahrzeug präzise positioniert werden soll, ab einen bestimmten Zeitpunkt vom Fahrzeug verdeckt und somit für ein die Positionierung vornehmendes Fahrerassistenzsystem nicht mehr sichtbar ist. Dieser Nachteil kann zwar durch den Marker beseitigt werden, dessen Position während der Positionierung sichtbar ist, allerdings muss dazu die Relativposition des Markers zur Ladeeinrichtung bekannt sein. Ein Nutzer muss daher entweder die relative Position des Markers zur Ladeeinrichtung mit hoher Genauigkeit messen und diese Daten dem Fahrerassistenzsystem mitteilen oder er muss die Markierung exakt nach einer Einbauanleitung anbringen. Beide Vorgehensweisen sind allerdings nicht besonders komfortabel.

Der Erfindung liegt daher die Aufgabe zugrunde, ein Verfahren anzugeben, das eine automatische Bestimmung der Relativposition des Markers zur Ladeeinrichtung ermöglicht.

Zur Lösung dieser Aufgabe ist bei einem Verfahren der eingangs genannten Art erfindungsgemäß vorgesehen, dass die Kamera ein Bild aufnimmt, auf dem sowohl der Marker als auch die Ladeeinrichtung sichtbar sind und dass die Relativposition des Markers zur Ladeeinrichtung durch eine Auswertung des Bilds bestimmt wird.

Die Erfindung beruht auf der Idee, die Relativposition des Markers zur Ladeeinrichtung zu Beginn der Positionierung automatisch zu erfassen, da dann sowohl die Ladeeinrichtung als auch der Marker gleichzeitig sichtbar sind. Die Ladeeinrichtung und der Marker sind sichtbar, solange das Kraftfahrzeug sich in einem bestimmten Abstand vor der Ladeeinrichtung befindet, so dass die am oder im Kraftfahrzeug angebrachte Kamera beide Objekte, nämlich den Marker und die Ladeeinrichtung erfasst. In diesem Zustand wird ein Bild aufgenommen. Durch eine Bildauswertung, die auf herkömmlichen Verfahren beruht, kann auf diese Weise die Relativposition des Markers zur Ladeeinrichtung bestimmt werden.

Wenn sich das Kraftfahrzeug anschließend im Rahmen des Positionierungsverfahrens der Ladeeinrichtung nähert, wird diese von der Karosserie des Kraftfahrzeugs verdeckt, so dass sich die Ladeeinrichtung nicht mehr im Sichtfeld der Kamera befindet. Die Kamera erfasst dann den ortsfest installierten Marker, wertet die Bildaufnahme des Markers aus und bestimmt daraus die Relativposition des Kraftfahrzeugs zum Marker. Da die Relativposition des Markers zur Ladeeinrichtung bekannt ist, kann das Kraftfahrzeug indirekt durch sequentielles Bestimmen der Relativposition des Kraftfahrzeugs zum Marker exakt oberhalb der Ladeeinrichtung positioniert werden.

Bei dem erfindungsgemäßen Verfahren entfällt somit der als unkomfortabel empfundene Schritt der Bestimmung der Relativposition des Markers zur Ladeeinrichtung. Es genügt daher, dass der Benutzer den Marker an irgendeiner geeigneten Stelle anbringt, beispielsweise an der Stirnwand einer Garage, da alle erforderlichen Schritte zum Positionieren des Kraftfahrzeugs bei dem erfindungsgemäßen Verfahren automatisch durchgeführt werden können.

Eine Weiterbildung des Verfahrens sieht vor, dass zum Aufnehmen der Bildaufnahme des Markers und zum Aufnehmen des den Marker und die Ladeeinrichtung zeigenden Bilds zwei am Kraftfahrzeug angeordnete Kameras verwendet werden. Mit zwei horizontal versetzt angeordneten Kameras können Stereoaufnahmen erzeugt werden, die eine besonders zuverlässige Positionsbestimmung ermöglichen.

Es liegt auch im Rahmen der Erfindung, dass zwei oder mehr ortsfest installierte Marker mittels der wenigstens einen Kamera erfasst werden. Beispielsweise können zwei nebeneinander angeordnete Marker verwendet werden. In diesem Fall können die jeweiligen Marker kleiner ausgebildet sein, so dass sie nicht störend wirken. Ein Marker kann als grafisches Objekt ausgebildet sein und z. B. ein Symbol, ein Logo, einen Buchstaben oder eine Zahl zeigen. Ebenso kann ein Marker als QR-Code ausgebildet sein. Vorzugsweise kann ein Marker an einer Wand installiert werden.

Bei dem erfindungsgemäßen Verfahren kann es vorgesehen sein, dass die Relativposition des Kraftfahrzeugs zum Marker und die Relativposition des Markers zur Ladeeinrichtung anhand von optischen Parametern der wenigstens einen Kamera und trigonometrischen Zusammenhängen der Positionen der Kamera, des Markers und der Ladeeinrichtung bestimmt werden. Dazu zählen beispielsweise die Brennweite der Kamera, die Größe des Markers sowie die Größe der Ladeeinrichtung.

Daneben betrifft die Erfindung ein Kraftfahrzeug, mit wenigstens einer Kamera sowie einer induktiv aufladbaren Batterie. Das erfindungsgemäße Kraftfahrzeug zeichnet sich dadurch aus, dass es eine Steuerungseinrichtung aufweist, die zur Durchführung des beschriebenen Verfahrens zum Positionieren des Kraftfahrzeugs ausgebildet ist.

Die Erfindung wird nachfolgend anhand eines Ausführungsbeispiels unter Bezugnahme auf die Zeichnungen erläutert. Die Zeichnungen sind schematische Darstellungen und zeigen:

Fig. 1     eine Frontansicht eines oberhalb einer Ladeeinrichtung positionierten Kraftfahrzeugs;

Fig. 2     ein Kraftfahrzeug während der Durchführung des erfindungsgemäßen Verfahrens;

Fig. 3     das in Fig. 2 gezeigte Kraftfahrzeug während der Durchführung des erfindungsgemäßen Verfahrens und

Fig. 4     das in den Fig. 2 und 3 gezeigte Kraftfahrzeug im positionierten Zustand.

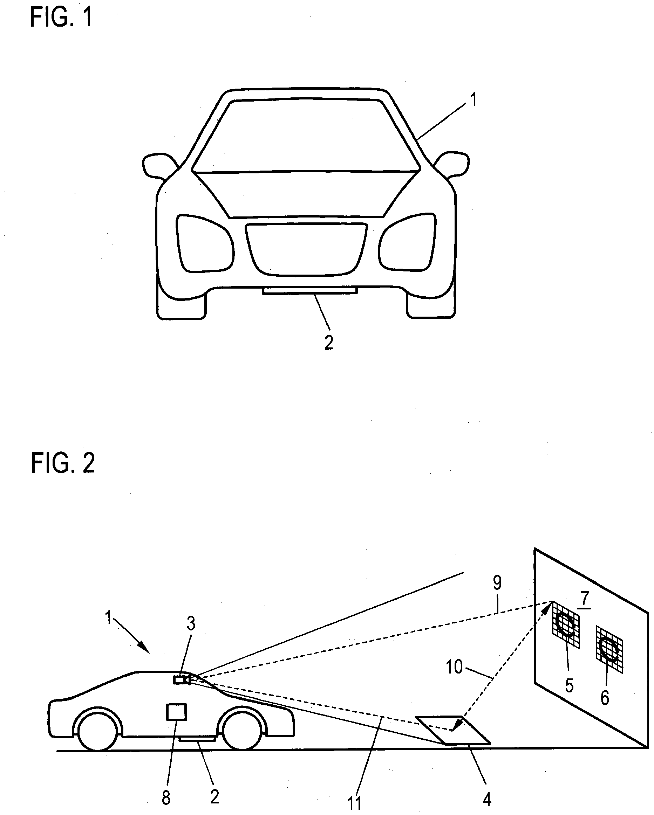

Fig. 1 ist eine Frontalansicht eines Kraftfahrzeugs 1, das einen Elektroantrieb und eine Batterie als Energiespeicher aufweist. Zum Aufladen der Batterie wird das Kraftfahrzeug 1 oberhalb einer ortsfest angeordneten Ladeeinrichtung positioniert. Die Ladeeinrichtung ist plattenförmig ausgebildet und weist Induktionsspulen auf, die mit einer Ladeeinrichtung 2 an der Unterseite des Kraftfahrzeugs 1 zusammenwirken, wodurch ein Strom zum Laden der Batterie induziert wird. Allerdings ist es erforderlich, das Kraftfahrzeug 1 mit seiner Ladeeinrichtung 2 genau oberhalb der ortsfesten Ladeeinrichtung zu positionieren, damit der Wirkungsgrad des induktiven Aufladevorgangs hoch ist.

Die Fig. 2, 3 und 4 zeigen verschiedene Schritte des Verfahrens zum Positionieren des Kraftfahrzeugs oberhalb der ortsfeste Ladeeinrichtung.

Fig. 2 zeigt den Beginn des Verfahrens. Das in Fig. 2 in einer Seitansicht gezeigte Kraftfahrzeug 1 weist an seiner Unterseite die fahrzeugseitige Ladeeinrichtung 2 auf. Oberhalb der Windschutzscheibe ist eine Kamera 3 angeordnet, die nach vorne gerichtet ist. Im Sichtfeld der Kamera 3 befindet sich einerseits eine ortsfeste Ladeeinrichtung 4, die als Platte ausgebildet ist und sich am Boden befindet. In Fig. 2 erkennt man, dass sich im Sichtfeld der Kamera auch zwei Marker 5, 6 befinden, die an einer Wand 7 angebracht sind, so dass sie senkrecht zum Boden angeordnet sind. Die beiden Marker 5, 6 sind auf gleicher Höhe horizontal beabstandet angeordnet. In dem dargestellten Ausführungsbeispiel zeigen beide Marker 5, 6 ein "C", dies ist jedoch lediglich als Beispiel zu verstehen, stattdessen kann auch ein anderes grafisches Objekt oder ein Logo ein QR-Code als Marker verwendet werden.

Die Kamera 3 erfasst in der in Fig. 2 gezeigten Situation die Marker 5, 6 und führt eine Bildaufnahme durch. Diese Bildaufnahme wird in einer Steuerungseinrichtung 8 ausgewertet, dadurch wird die Relativposition des Kraftfahrzeugs 1 zu den Markern 5, 6 bestimmt. In Fig. 2 verbindet eine Linie 9 die Kamera 3 mit einer (gedachten) linken oberen Ecke des Markers 5. Die Linie 9 gibt somit die Relativposition des Kraftfahrzeugs 1 zum Marker 5 an. Analog kann auf diese Weise auch die Relativposition zwischen der Kamera 3 und dem Marker 6 bestimmt werden.

In Fig. 2 erkennt man, dass auf dem von der Kamera 3 aufgenommenen Bild sowohl die Marker 5, 6 als auch die Ladeeinrichtung 4 sichtbar ist. Daher kann die Relativposition der Marker 5, 6 zur Ladeeinrichtung 4 durch eine Auswertung des Bilds bestimmt werden. In Fig. 2 wird die Relativposition durch eine Linie 10 dargestellt. Analog kann auch die Relativposition des anderen Markers 6 zur Ladeeinrichtung 4 durch eine Auswertung des Bilds in der Steuerungseinrichtung 8 bestimmt werden.

Das Bestimmen der Relativposition der Ladeeinrichtung 4 zum Marker 5 kann durch die folgende Formel ausgedrückt werden:

$$P_{M,LE} = P_{LE} - P_M,$$

wobei $P_{M,LE}$ ein Vektor ist, der die Relativposition der Ladeeinrichtung 4 zum Marker 5 angibt, $P_{LE}$ ist die Relativposition des Kraftfahrzeugs 1 zur Ladeeinrichtung 4 und $P_M$ ist die Relativposition des Kraftfahrzeugs 1 zum Marker 5. $P_M$ entspricht somit der Linie 9, $P_{M,LE}$ entspricht der Linie 10 und $P_{LE}$ wird in Fig. 2 durch die Linie 11 dargestellt. Die Relativpositionen bzw. die Linien 9, 10, 11 können als Vektoren angesehen werden.

Ausgehend von der in Fig. 2 gezeigten Situation wird das Kraftfahrzeug durch ein automatisches Verfahren fahrerlos und somit pilotiert auf eine Zielposition oberhalb der ortsfesten Ladeeinrichtung 4 bewegt.

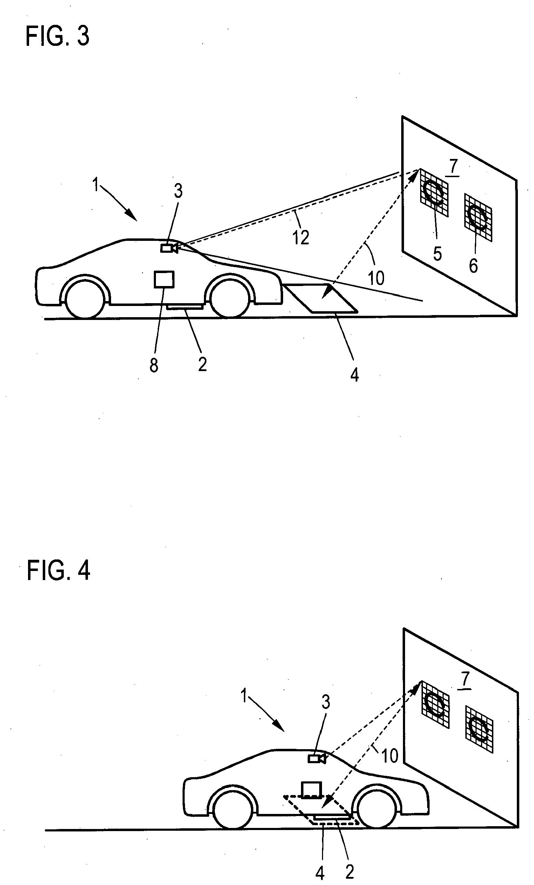

Fig. 3 zeigt das Verfahren, nachdem sich das Kraftfahrzeug 1 ausgehend von der in Fig. 2 gezeigten Situation der Ladeeinrichtung 4 genähert hat. Im Sichtfeld der Kamera 3 befindet sich nach wie vor der Marker 5 sowie der daneben angeordnete Marker 6. Allerdings befindet sich die Ladeeinrichtung 4 nicht mehr im Sichtfeld der Kamera, da sich das Kraftfahrzeug 1 bereits unmittelbar vor der Ladeeinrichtung 4 befindet. In dieser Situation kann eine Positionierung indirekt erfolgen, da die Relativposition des Markers 5 zur Ladeeinrichtung 4, die durch die Auswertung des Bilds zu dem in Fig. 2 gezeigten Zeitpunkt bestimmt wurde, erfolgen kann. Die oben erwähnte Formel kann zur Bestimmung der Relativposition des Kraftfahrzeugs zur Ladeeinrichtung folgendermaßen umgestellt werden:

$$P_{LE} = P_M + P_{M,LE}$$

Die Relativposition des Kraftfahrzeugs 1 zur Ladeeinrichtung 4 kann somit durch vektorielles Addieren der aktuellen Relativposition zwischen dem Kraftfahrzeug 1, genauer gesagt der Kamera 3 des Kraftfahrzeugs 1, und des Markers 5 erfolgen. Diese Relativposition wird in Fig. 3 durch eine Linie 12 angegeben. Dazu wird die Relativposition zwischen dem Marker 5 und der Ladeeinrichtung 4 addiert, die in Fig. 3 durch die Linie 10 angegeben wird. Diese Relativposition ist konstant und wurde bereits während des in Fig. 2 gezeigten Zeitpunkts ermittelt. Die gesuchte Relativposition $P_{LE}$ kann somit durch eine Addition zweier Vektoren berechnet werden, obwohl die Ladeeinrichtung 4 sich nicht im Sichtfeld der Kamera 3 befindet.

Auf diese Weise wird das Kraftfahrzeug 1 sequentiell von der Steuerungseinrichtung 8 zu einer Zielposition oberhalb der Ladeeinrichtung 4 bewegt, die Steuerungseinrichtung 8 greift dazu auf das Lenksystem sowie die Steuerung eines Antriebsmotors des Kraftfahrzeugs 1 und das Bremssystem zu.

Fig. 4 zeigt den Zustand, nachdem das Kraftfahrzeug 1 durch das Verfahren exakt oberhalb der Ladeeinrichtung 4 positioniert worden ist. Da das Kraftfahrzeug 1 bzw. dessen fahrzeugseitige Ladeeinrichtung 2 optimal oberhalb der ortsfesten Ladeeinrichtung 4 positioniert worden ist, kann der sich daran anschließende induktive Ladevorgang mit hohem Wirkungsgrad durchgeführt werden.

Das beschriebene Verfahren weist den Vorteil auf, dass es für den Benutzer höchst komfortabel ist, da es ausreichend ist, wenigstens einen Marker so zu positionieren, beispielsweise an einer Wand einer Garage, eines Carports oder eines Stellplatzes in einer Tiefgarage, dass der Marker während der Annäherung des Kraftfahrzeugs zu einem Zeitpunkt im Sichtfeld der Kamera ist, wenn sich auch die ortsfeste Ladeeinrichtung im Sichtfeld der Kamera befindet. Da keine individuelle Anpassung eine Relativposition zwischen Marker und Ladeeinrichtung 4 erforderlich ist, kann das Verfahren zum Positionieren auch auf "fremden" Parkplätzen durchgeführt werden, beispielsweise in einem Parkhaus oder auf einem Firmenparkplatz.

**Patentansprüche**

1. Verfahren zum Positionieren eines Kraftfahrzeugs (1) oberhalb einer Ladeeinrichtung (4) zum induktiven Laden einer Batterie, mit den folgenden Schritten:

   - Erfassen wenigstens eines ortsfest installierten Markers (5, 6) mittels wenigstens einer am Kraftfahrzeug (1) angeordneten Kamera (3);
   - Auswerten wenigstens einer von der Kamera (3) aufgenommenen Bildaufnahme des Markers (5, 6) zum Bestimmen der Relativposition des Kraftfahrzeugs (1) zum Marker (5, 6);
   - autonomes Positionieren des Kraftfahrzeugs (1) oberhalb der Ladeeinrichtung (4) anhand der Relativposition des Markers (5, 6) zur Ladeeinrichtung (4);

   **dadurch gekennzeichnet,**
   **dass** die Kamera (3) ein Bild aufnimmt, auf dem sowohl der an einer Wand (7) installierte Marker (5, 6) als auch die Ladeeinrichtung (4) sichtbar sind und dass die Relativposition des Markers (5, 6) zur Ladeeinrichtung (4) durch eine Auswertung des Bilds bestimmt wird.

2. Verfahren nach Anspruch 1,
   **dadurch gekennzeichnet,**
   **dass** zum Aufnehmen der Bildaufnahme des Markers (5, 6) und zum Aufnehmen des den Marker (5, 6) und die Ladeeinrichtung (4) zeigenden Bilds zwei am Kraftfahrzeug (1) angeordnete Kameras (3) verwendet werden.

3. Verfahren nach Anspruch 1 oder 2,
   **dadurch gekennzeichnet,**
   **dass** zwei ortsfest installierte Marker (5, 6) mittels der wenigstens einen Kamera (3) erfasst werden.

4. Verfahren nach einem der vorangehenden Ansprüche,
   **dadurch gekennzeichnet,**
   **dass** die Relativposition des Kraftfahrzeugs (1) zum Marker (5, 6) und die Relativposition des Markers (5, 6) zur Ladeeinrichtung (4) anhand von optischen Parametern der wenigstens einen Kamera (3) und trigonometrischen Zusammenhängen der Positionen der Kamera (3), des Markers (5, 6) und der Ladeeinrichtung (4) bestimmt werden.

**5.** Kraftfahrzeug (1), mit wenigstens einer Kamera (3) sowie einer induktiv aufladbaren Batterie, **dadurch gekennzeichnet, dass** das Kraftfahrzeug (1) eine Steuerungseinrichtung (8) aufweist, die zur Durchführung des Verfahrens nach einem der Patentansprüche 1 bis 5 ausgebildet ist.

**Claims**

**1.** Method for positioning a motor vehicle (1) above a charging device (4) for the inductive charging of a battery, having the following steps:

- detecting at least one marker (5, 6), installed in stationary manner, by means of at least one camera (3) disposed on the motor vehicle (1);
- evaluating at least one image capture of the marker (5, 6) captured by the camera (3) for determining the relative position of the motor vehicle (1) to the marker (5, 6);
- autonomous positioning of the motor vehicle (1) above the charging device (4) on the basis of the relative position of the marker (5, 6) to the charging device (4);

**characterised in that** the camera (3) captures an image upon which both the marker (5, 6) installed on a wall (7) and the charging device (4) are visible and that the relative position of the marker (5, 6) to the charging device (4) is determined by means of an evaluation of the image.

**2.** Method according to claim 1, **characterised in that** for capturing the image capture of the marker (5, 6) and for capturing the image showing the marker (5, 6) and the charging device (4), two cameras (3) disposed on the motor vehicle (1) are used.

**3.** Method according to claim 1 or 2, **characterised in that** two markers (5, 6) installed in stationary manner are detected by means of the at least one camera (3).

**4.** Method according to any of the preceding claims, **characterised in that** the relative position of the motor vehicle (1) to the marker (5, 6) and the relative position of the marker (5, 6) to the charging device (4) are determined on the basis of optical parameters of the at least one camera (3) and trigonometric relationships between the positions of the camera (3), the marker (5, 6) and the charging device (4).

**5.** Motor vehicle (1) having at least one camera (3) and a battery which can be charged inductively, **characterised in that** the motor vehicle (1) has a control device (8) which is configured to carry out the method according to any of claims 1 to 5.

**Revendications**

**1.** Procédé de positionnement d'un véhicule automobile (1) au-dessus d'un dispositif de chargement (4) pour effectuer le chargement inducteur d'une batterie, avec les étapes suivantes consistant à :

- détecter au moins un marqueur (5, 6) installé fixe au moyen d'au moins une caméra (3) agencée dans le véhicule automobile (1) ;
- évaluer au moins une prise de vues du marqueur (5, 6) enregistrée par la caméra (3) pour déterminer la position relative du véhicule automobile (1) par rapport au marqueur (5, 6) ;
- positionner de manière autonome le véhicule automobile (1) au-dessus du dispositif de chargement (4) sur la base de la position relative du marqueur (5, 6) par rapport au dispositif de chargement (4) ;

**caractérisé en ce que** la caméra (3) reçoit une image sur laquelle autant le marqueur (5, 6) installé sur une paroi (7) que le dispositif de chargement (4) sont visibles et la position relative du marqueur (5, 6) par rapport au dispositif de chargement (4) est déterminée par une évaluation de l'image.

**2.** Procédé selon la revendication 1, **caractérisé en ce que** : deux caméras (3) agencées dans le véhicule automobile (1) sont utilisées pour enregistrer la prise de vues du marqueur (5, 6) et enregistrer l'image montrant le marqueur (5, 6) et le dispositif de chargement (4).

**3.** Procédé selon la revendication 1 ou 2, **caractérisé en ce que** : deux marqueurs installés fixes (5, 6) sont détectés au moyen de la au moins une caméra (3).

**4.** Procédé selon l'une quelconque des revendications précédentes, **caractérisé en ce que** : la position relative du véhicule automobile (1) par rapport au marqueur (5, 6) et la position relative du marqueur (5, 6) par rapport au dispositif de chargement (4) sont déterminées sur la base de paramètres optiques de la au moins une caméra (3) et de rapports trigonométriques des positions de la caméra (3), du marqueur (5, 6) et du dispositif de chargement (4).

5. Véhicule automobile (1) avec au moins une caméra (3) ainsi qu'une batterie à chargement inducteur, **caractérisé en ce que** :
le véhicule automobile (1) présente un dispositif de commande (8) qui est conçu pour réaliser le procédé selon l'une quelconque des revendications 1 à 5.

FIG. 1

FIG. 2

## FIG. 3

## FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011108689 A1
- DE 102011111051 A1
- JP 2010226945 A